# EUROPÄISCHE PATENTSCHRIFT

(11) **EP 1 291 525 B1**
(45) Veröffentlichungstag und Bekanntmachung des Hinweises auf die Patenterteilung: **11.11.2009**
(21) Anmeldenummer: 02019783.6
(22) Anmeldetag: 04.09.2002
(51) Int. Cl.: F04B 49/20, F04B 41/06, F25B 49/02

(54) **Verfahren zum Regeln eines Verdichtersatzes**
Method for controlling a set of compressors
Procédé de commande d'un ensemble de compresseurs

(30) Priorität: 07.09.2001 DE 10144018
(43) Veröffentlichungstag der Anmeldung: 12.03.2003
(73) Patentinhaber: Linde Kältetechnik GmbH, 50999 Köln (DE)
(72) Erfinder: Schierhorn, Uwe, 50389 Wesseling (DE); Olejnik, Janusz, 50670 Köln (DE); Gassen, Heinz, 53489 Sinzig (DE); Ernst, Franz-Josef, 53894 Mechernich (DE)
(74) Vertreter: Klunker . Schmitt-Nilson . Hirsch

(56) Entgegenhaltungen:
- EP-A- 0 444 332
- US-A- 4 951 475
- US-A- 5 797 729
- PATENT ABSTRACTS OF JAPAN vol. 015, no. 414 (M-1171), 22. Oktober 1991 (1991-10-22) & JP 03 172587 A (HITACHI LTD), 25. Juli 1991 (1991-07-25)
- PATENT ABSTRACTS OF JAPAN vol. 018, no. 155 (E-1524), 15. März 1994 (1994-03-15) & JP 05 328733 A (HITACHI LTD), 10. Dezember 1993 (1993-12-10)
- PATENT ABSTRACTS OF JAPAN vol. 016, no. 494 (M-1324), 13. Oktober 1992 (1992-10-13) & JP 04 179879 A (HITACHI LTD), 26. Juni 1992 (1992-06-26)

## Beschreibung

Die Erfindung betrifft ein Verfahren zum Regeln eines Verdichtersatzes, bestehend aus wenigstens zwei, von Elektromotoren angetriebenen Verdichtem, wobei wenigstens einer der Verdichter drehzahlgeregelt betrieben werden kann.

In gewerblichen und industriellen Kälte-, Klima- und Wärmepumpenanlagen kommen zur Erzeugung der erforderlichen Kälteleistung u. a. Verdichter zum Einsatz. Diese Verdichter werden im Regelfall von Elektromotoren angetrieben. Abhängig von der Größe der Kälte- oder Klimaanlage können auch mehrere Verdichter erforderlich sein, die dann zu einem sog. Verdichtersatz zusammengeschaltet werden. Der Stand der Technik ist aus JP 031 72 587 A bekannt.

Bei der Verwendung dieser Verdichtersätze tritt jedoch das Problem auf, dass zum einen die Verdichterleistung an den tageszeitlich stark schwankenden Bedarf angepasst werden muss und zum anderen auch während kurzzeitiger Bedarfsspitzen die für die Kältebereitstellung erforderliche Verdichterleistung erbracht werden muss; Gleiches gilt selbstverständlich auch für den Betrieb von Klima- und Wärmepumpenanlagen.

Von derartigen Verdichtersätzen wird ein geringer Energieverbrauch, niedrige Investitionskosten, hohe Betriebssicherheit, konstante Verdampfungstemperatur und konstante Warentemperaturen erwartet. Um diese Vorgaben zu erreichen, werden Regler benötigt, die eine hohe Regelgüte aufweisen - also schnell und mit wenig Überschwingen ausregeln können. Insbesondere bei vergleichsweise großen Lastsprüngen, Grundlastwechseln, dem Schalten von Festnetzverdichtem, etc. stoßen bisherige Regelverfahren an ihre Grenzen.

Des Weiteren wird von einem Regler bzw. Regelverfahren gefordert, dass die Verdampfungstemperatur an die zwangsläufig auftretenden Änderungen der Temperatur und Feuchte innerhalb eines Ladengeschäftes angepasst werden kann.

Aufgabe der vorliegenden Erfindung ist es, ein gattungsgemäßes Verfahren zum Regeln eines Verdichtersatzes anzugeben, das die vorgenannten Anforderungen erfüllt.

Zur Lösung dieser Aufgabe wird ein gattungsgemäßes Verfahren zum Regeln eines Verdichtersatzes vorgeschlagen, wobei die Regelung mittels eines Reglers, dessen Änderungsgeschwindigkeit von der Regelabweichung und von der Last bestimmt wird, erfolgt, wobei bei geringer Last die Änderungsgeschwindigkeit verringert und bei hoher Last die Änderungsgeschwindigkeit erhöht wird.

Die Last ermittelt der Reger zum einen aus der Anzahl der zugeschalteten Verdichter und zum anderen aus der Frequenz des oder der drehzahlgeregelten Verdichter. Dadurch, dass bei geringer Last die Änderungsgeschwindigkeit verringert wird, kann ein unerwünschtes Schwingen des Reglers weitestgehend vermieden werden. Wird bei hoher Last die Änderungsgeschwindigkeit erhöht, so kann dadurch ein schnelles Ausregeln gewährleistet werden.

Das erfindungsgemäße Verfahren zum Regeln eines Verdichtersatzes weiterbildend wird vorgeschlagen, dass die Änderungsrichtung der Regelabweichung erfasst wird und bei abnehmender Regelabweichung unterhalb eines einstellbaren Grenzwertes keine Sollwertänderung des oder der drehzahlgeregelt betriebenen Verdichter erfolgt.

Auch diese Ausgestaltung des erfindungsgemäßen Verfahrens verhindert das unerwünschte Schwingen des Reglers. Bei dieser Ausgestaltung setzt eine Regelung erst dann wieder ein, wenn die Regelabweichung über den einstellbaren bzw. eingestellten Grenzwert hinausgeht oder die Regelabweichung steigt.

Im Falle des Zuschaltens von Verbrauchern und einem damit verbundenen Überschreiten eines einstellbaren Grenzwertes der Regelabweichung kann dem oder zumindest einem der drehzahlgeregelt betriebenen Verdichter die maximale Drehzahl vorgegeben und bei weiter steigender Regelabweichung der oder zumindest einer der Festnetzverdichter zeitverzögert zugeschaltet werden.

Unter dem Begriff "Festnetzverdichter" seien der bzw. die Verdichter zu verstehen, die mit dem starren Netz verbunden sind.

Im Falle des Abschaltens von Verbrauchern und einem damit verbundenen Überschreiten eines einstellbaren Grenzwertes der Regelabweichung kann dem oder zumindest einem der drehzahlgeregelt betriebenen Verdichter die minimale Drehzahl vorgegeben und bei weiter steigender Regelabweichung der oder zumindest einer der Festnetzverdichter zeitverzögert abgeschaltet werden.

Die beiden vorbeschriebenen Maßnahmen ermöglichen es, auch bei großen Laständerungen ― wie sie durch das Zu- bzw. Abschalten von Verbrauchern entstehen ― ein schnelles Ausregeln zu ermöglichen.

Im Falle des Zuschaltens des oder eines Festnetzverdichters wird die Leistung des oder der drehzahlgeregelt betriebenen Verdichter so weit reduziert, dass die Gesamtleistung derjenigen vor dem Zuschalten des oder eines Festnetzverdichters entspricht.

Im Falle des Abschaltens des oder eines Festnetzverdichters wird die Leistung des oder der drehzahlgeregelt betriebenem Verdichter hingegen soweit erhöht, dass die Gesamtleistung wiederum derjenigen vor dem Zuschalten des oder eines Festnetzverdichters entspricht.

Mittels der beiden vorbeschriebenen Verfahrensführungen wird auch beim Zu- bzw. Abschalten eines Festnetzverdichters eine geringst mögliche Regelabweichung realisiert.

Eine weitere vorteilhafte Ausgestaltung des erfindungsgemäßen Verfahrens zum Regeln eines Verdichtersatzes ist dadurch gekennzeichnet, dass die Regelung wenigstens einen Umgebungsparameter, insbesondere die in der Umgebung des oder der Verbraucher herrschende(n) Temperatur(en) oder Feuchte(n), berücksichtigt.

Unter dem Begriff "Verbraucher" seien Kühlstellen, wie Kühlregale, Kühltruhen, etc., und/oder Kühlräume zu verstehen.

Da der Kältebedarf dieser Verbraucher von einer Vielzahl von Umgebungsparametern abhängt, wird sich durch eine durch die Erfassung zumindest eines Umgebungsparameters ergebende Sollwertverschiebung ein optimaler Sollwert einstellen.

Sofern das gattungsgemäße Verfahren für einen Verdichtersatz, der zwei mittels eines Frequenzumrichters drehzahlregelbare Verdichter aufweist, wobei der Frequenzumrichter nur jeweils einem Verdichter zugeordnet ist, ausgelegt ist, werden im Falle eines Grundlastwechsels der drehzahlgeregelte Verdichter und der Festnetzverdichter ― sofern letzterer angeschaltet ist ― abgeschaltet und anschließend de Frequenzumrichter dem bisherigen Festnetzverdichter zugeschaltet und der nunmehr drehzahlgeregelte Verdichter angeschaltet; hierbei wird diesem als Sollwertvorgabe die Frequenz des vor dem Grundlastwechsel drehzahlgeregelten Verdichters vorgegeben.

Mittels dieser Verfahrensführung kann bei einer minimalen Regelabweichung ein Grundlastwechsel innerhalb einen sehr kurzen Zeit, beispielsweise innerhalb weniger Sekunden, durchgeführt werden.

Das erfindungsgemäße Verfahren weiterbildend wird vorgeschlagen, dass bei einem Unterschreiten der von dem Verdichtersatz zu erbringenden Leistung unter die von dem Verdichtersatz erbringbare Minimalleistung ein zeitverzögertes Abschalten der oder des letzten im Betrieb befindlichen Verdichters erfolgt, wobei die Größe der Zeitverzögerung von der Höhe der Regelabweichung abhängig ist.

Diese Verfahrensführung hat eine Verringerung der Schalthäufigkeit und damit des unerwünschten Taktens, das den Verschleiß der verwendeten Verdichter erhöht, zur Folge.

Das erfindungsgemäße Verfahren zum Regeln eines Verdichtersatzes weiterbildend wird ferner vorgeschlagen, dass bei einem Betrieb eines drehzahlgeregelten Verdichters bei maximaler Drehzahl oder annähernd maximaler Drehzahl über einen Zeitraum von mehr als 2 Minuten, vorzugsweise von mehr als 1 Minute, der oder wenigstens einer der Festnetzverdichter zugeschaltet und die Drehzahl des drehzahlgeregelten Verdichters verringert wird.

Sofern ein drehzahlgeregelter Verdichter bei maximaler Drehzahl bzw. annähernd maximaler Drehzahl betrieben wird, arbeitet der Verdichtersatz in einem energetisch ungünstigen Arbeitsbereich. In diesem Fall erfolgt nunmehr erfindungsgemäß ein Zuschalten eines Festnetzverdichters und damit einhergehend ein Verringern der Drehzahl des drehzahlgeregelten Verdichters, so dass der energetisch ungünstige Arbeitsbereich verlassen wird. Hierbei wird die Drehzahl des drehzahlgeregelten Verdichters nach dem Zuschalten des Festnetzverdichters vorzugsweise soweit reduziert, dass die zur Verfügung gestellte Leistung derjenigen, die vor der Reduzierung der Drehzahl herrschte, entspricht.

Sofern der oder die verwendeten Frequenzumrichter eine Erfassung des oder der Motorströme des oder der drehzahlgeregelten Verdichter ermöglichen, wird entsprechend einer weiteren vorteilhaften Ausgestaltung des erfindungsgemäßen Verfahrens vorgeschlagen, dass bei einem Überschreiten des Motorstromes über den Nennstrom des zugeordneten Frequenzumrichters der Motorstrom zeitabhängig verringert wird.

Mittels dieser Verfahrensführung kann wiederum ein Abschalten des bzw. der Verdichter durch den Frequenzumrichter vermieden werden.

## Patentansprüche

1. Verfahren zum Regeln eines Verdichtersatzes, bestehend aus wenigstens zwei, von Elektromotoren angetriebenen Verdichtern, wobei wenigstens einer der Verdichter drehzahlgeregelt betrieben werden kann, wobei die Regelung mittels eines Reglers erfolgt,
**dadurch gekennzeichnet,**
**dass** die Änderungsgeschwindigkeit des Reglers von der Regelabweichung und von der Last bestimmt wird und dass bei geringer Last die Änderungsgeschwindigkeit verringert und bei hoher Last die Änderungsgeschwindigkeit erhöht wird.

2. Verfahren nach Anspruch 1, **dadurch gekennzeichnet, dass** die Änderungsrichtung der Regelabweichung erfasst wird und bei einer abnehmenden Regelabweichung unterhalb eines einstellbaren Grenzwertes keine Sollwertänderung des oder der drehzahlgeregelt betriebenen Verdichter erfolgt.

3. Verfahren nach Anspruch 1 oder 2, wobei der Verdichtersatz wenigstens einen Festnetzverdichter aufweist, **dadurch gekennzeichnet, dass** im Falle des Zuschaltens von Verbrauchem und einem damit verbundenen Überschreiten eines einstellbaren Grenzwertes der Regelabweichung dem oder zumindest einem der drehzahlgeregelt betriebenen Verdichter die maximale Drehzahl vorgegeben und bei weiter steigender Regelabweichung der oder zumindest einer der Festnetzverdichter zeitverzögert zugeschaltet wird.

4. Verfahren nach einem der vorhergehenden Ansprüche 1 bis 3, wobei der Verdichtersatz wenigstens einen Festnetzverdichter aufweist; **dadurch gekennzeichnet, dass** im Falle des Abschaltens von Verbrauchem und einem damit verbundenen Überschreiten eines einstellbaren Grenzwertes der Regelabweichung dem oder zumindest einem der drehzahlgeregelt betriebenen Verdichter die minimale Drehzahl vorgegeben und bei weiter steigender Regelabweichung der oder zumindest einer der Festnetzverdichter zeitverzögert abgeschaltet wird.

5. Verfahren nach einem der vorhergehenden Ansprüche 1 bis 4, wobei der Verdichtersatz wenigstens einen Festnetzverdichter aufweist, **dadurch gekennzeichnet, dass** im Falle des Zuschaltens des oder eines Festnetzverdichters die Leistung des oder der drehzahlgeregelt betriebenen Verdichter soweit reduziert wird, dass die Gesamtleistung derjenigen vor dem Zuschalten des oder eines Festnetzverdichters entspricht.

6. Verfahren nach einem der vorhergehenden Ansprüche 1 bis 5, wobei der Verdichtersatz wenigstens einen Festnetzverdichter aufweist, **dadurch gekennzeichnet, dass** im Falle des Abschaltens des oder eines Festnetzverdichters die Leistung des oder der drehzahlgeregelt betriebenen Verdichter soweit erhöht wird, dass die Gesamtleistung derjenigen vor dem Zuschalten des oder eines Festnetzverdichters entspricht

7. Verfahren nach einem der vorhergehenden Ansprüche 1 bis 6, **dadurch gekennzeichnet, dass** die Regelung wenigstens einen Umgebungsparameter, insbesondere die in der Umgebung des oder der Verbraucher herrschenden Temperatur(en) oder Feuchte(n), berücksichtigt

8. Verfahren nach einem der vorhergehenden Ansprüche 1 bis 7, wobei der Verdichtersatz zwei mittels eines Frequenzumrichters drehzahlregelbare Verdichter aufweist und der Frequenzumrichter jedoch nur einem Verdichter zugeordnet wird, **dadurch gekennzeichnet, dass** im Falle eines Grundlastwechsels der drehzahlgeregelte Verdichter und der Festnetzverdichter, sofern dieser angeschaltet ist, abgeschaltet werden, der Frequenzumrichter dem bisherigen Festnetzverdichter zugeschaltet und der nunmehr drehzahlgeregelte Verdichter angeschaltet wird, wobei diesem als Sollwertvorgabe die Frequenz des vor dem Grundlastwechsel drehzahlgeregeltem Verdichters vorgegeben wird.

9. Verfahren nach einem der vorhergehenden Ansprüche 1 bis 8, **dadurch gekennzeichnet, dass** bei einem Unterschreiten der von dem Verdichtersatz zu erbringenden Leistung unter die geringste von dem Verdichtersatz erbringbare Leistung ein zeitverzögertes Abschalten der oder des letzten im Betrieb befindlichen Verdichters erfolgt, wobei die Größe der Zeitverzögerung von der Höhe der Regelabweichung abhängig ist.

10. Verfahren nach einem der vorhergehenden Ansprüche 1 bis 9, **dadurch gekennzeichnet, dass** bei einem Betrieb eines drehzahlgeregelten Verdichters bei maximaler Drehzahl oder annähernd maximaler Drehzahl über einen Zeitraum von mehr als 2 Minuten, vorzugsweise von mehr als 1 Minute, der oder wenigstens einer der Festnetzverdichter zugeschaltet und die Drehzahl des drehzahlgeregelten Verdichters verringert wird.

11. Verfahren nach einem der vorhergehenden Ansprüche 1 bis 10, wobei der oder die verwendeten Frequenzumrichter eine Erfassung des oder der Motorströme des oder der drehzählgeregelten Verdichter ermöglichen, **dadurch gekennzeichnet, dass** bei einem Überschreiten des Motorstromes über den Nennstrom des zugeordneten Frequenzumrichters der Motorstrom, vorzugsweise zeitverzögert verringert wird.

## Claims

1. A method of controlling a set of compressors comprising at least two compressors driven by electric motors, at least one of said compressors being adapted to be operated in speed-controlled manner, said control operation being effected by a controller,
**characterized in that** the rate of change of the controller is determined by the control deviation and the load and that the rate of change is reduced in case of low load and the rate of change is increased in case of high load.

2. A method according to claim 1,
**characterized in that** the direction of change of the control deviation is detected and, with decreasing control deviation below an adjustable limit value, no set point alteration of the compressor or compressors operated in speed-controlled manner is effected.

3. A method according to claim 1 or 2,
in which the set of compressors comprises at least one fixed network compressor,
**characterized in that**, when loads are turned on and an adjustable limit value of the control deviation is exceeded thereby, the maximum speed is set to the or at least one of the compressors operated in speed-controlled manner and, with a further increasing control deviation, the or at least one of the fixed network compressors is turned on in time-delayed manner.

4. A method according to any of the preceding claims 1 to 3,
in which the set of compressors comprises at least one fixed network compressor,
**characterized in that**, when loads are turned off and an adjustable limit value of the control deviation is exceeded thereby, the minimum speed is set to the or at least one of the compressors operated in speed-controlled manner and, with a further increasing control deviation, the or at least one of the fixed network compressors is turned off in time-delayed manner.

5. A method according to any of the preceding claims 1 to 4,
in which the set of compressors comprises at least one fixed network compressor,
**characterized in that**, when the or one fixed network compressor is turned on, the capacity of the compressor or compressors operated in speed-controlled manner is reduced to such an extent that the overall capacity corresponds to that prior to turning on of the or one fixed network compressor.

6. A method according to any of the preceding claims 1 to 5,
in which the set of compressors comprises at least one fixed network compressor,
**characterized in that**, when the or one fixed network compressor is turned off, the capacity of the compressor or compressors operated in speed-controlled manner is increased to such an extent that the overall capacity corresponds to that prior to turning on of the or one fixed network compressor.

7. A method according to any of the preceding claims 1 to 6,
**characterized in that** the control operation takes into consideration at least one environmental parameter, in particular the temperature(s) and humidity (humidities) prevailing in the environment of the load or loads.

8. A method according to any of the preceding claims 1 to 7,
in which the set of compressors comprises two compressors adapted to be speed-controlled by means of a frequency converter, but the frequency converter is associated with one compressor only,
**characterized in that**, in case of an alteration in basic load, the speed-controlled compressor and the fixed network compressor, if the latter is turned on, are turned off, the frequency converter is connected to the former fixed network compressor, and the now speed-controlled compressor is turned on, with the frequency of the compressor speed-controlled before the alteration in basic load being set to said latter compressor as set point.

9. A method according to any of the preceding claims 1 to 8,
**characterized in that**, when the capacity to be provided by the set of compressors falls below the lowest capacity to be provided by the set of compressors, the last compressor(s) in operation is(are) turned off in time-delayed manner, with the magnitude of the time delay being dependent on the amount of the control deviation.

10. A method according to any of claims 1 to 9,
**characterized in that**, in case of operation of a speed-controlled compressor at maximum speed or approximately maximum speed over of period of time of more than 2 minutes, preferably more than 1 minute, the or at least one of the fixed network compressors is turned on and the speed of the speed-controlled compressor is reduced.

11. A method according to any of claims 1 to 10,
in which the frequency converter(s) used permit(s) detection of the motor current(s) of the speed-controlled compressor(s),
**characterized in that**, when the motor current exceeds the rated current of the associated frequency converter, the motor current is reduced, preferably in time-delayed manner.

## Revendications

1. Procédé de commande d'un ensemble de compresseurs constitué par au moins deux compresseurs entraînés par des moteurs électriques, au moins l'un des compresseurs pouvant être entraîné avec régulation de sa vitesse de rotation, la régulation étant effectuée au moyen d'un régulateur,
**caractérisé en ce que**
la vitesse de variation du régulateur est déterminée par l'écart de réglage et la charge, et **en ce que**, pour une charge plus faible, la vitesse de variation diminue et, pour une charge plus élevée, la vitesse de variation augmente.

2. Procédé selon la revendication 1, **caractérisé en ce que** le sens de variation de l'écart de réglage est détecté et que pour un écart de réglage se réduisant au-dessous d'une valeur de seuil prédéterminée il ne se produit aucune modification de la valeur de consigne du ou des compresseurs entraînés avec régulation de vitesse de rotation.

3. Procédé selon la revendication 1 ou 2, dans lequel l'ensemble de compresseurs présente au moins un compresseur alimenté par le secteur **caractérisé en ce que**, lorsque des utilisateurs se connectent, et qu'il se produit un franchissement corrélatif d'une valeur de consigne prédéterminée par l'écart de réglage, la vitesse de rotation maximale est prescrite au ou au moins à l'un des compresseurs entraînés avec régulation de vitesse de rotation, et, pour un écart de réglage continuant à augmenter, le ou au moins l'un des compresseurs alimentés par le secteur est enclenché de manière temporisée.

4. Procédé selon l'une des revendications précédentes 1 à 3, dans lequel l'ensemble de compresseurs présente au moins un compresseur alimenté par le secteur **caractérisé en ce que** lorsque des utilisateurs se déconnectent, et qu'il se produit un franchissement corrélatif d'une valeur de consigne prédéterminée par l'écart de réglage, la vitesse de rotation minimale est prescrite au ou au moins à l'un des compresseurs entraînés avec régulation de vitesse de rotation et, pour un écart de réglage continuant à augmenter, le ou au moins l'un des compresseurs alimentés par le secteur est enclenché de manière temporisée.

5. Procédé selon l'une des revendications précédentes 1 à 4, dans lequel l'ensemble de compresseurs présente au moins un compresseur alimenté par le secteur **caractérisé en ce que** dans le cas de la l'enclenchement du ou d'un compresseur alimenté par le secteur, la puissance du ou d'un compresseur entraîné avec régulation de vitesse est réduite de sorte que la puissance totale corresponde à celle avant l'enclenchement du ou d'un compresseur alimenté par le secteur.

6. Procédé selon l'une des revendications précédentes 1 à 5, dans lequel l'ensemble de compresseurs présente au moins un compresseur alimenté par le secteur **caractérisé en ce que** lorsque le ou un compresseur alimenté par le secteur est déconnecté, la puissance du ou d'un compresseur entraîné avec régulation de vitesse augmente de sorte que la puissance totale corresponde à celle avant l'enclenchement du ou d'un compresseur alimenté par le secteur.

7. Procédé selon l'une des revendications précédentes 1 à 6, **caractérisé en ce que** la régulation tient compte d'au moins un paramètre environnemental, notamment la température et l'humidité régnant au voisinage du ou des utilisateurs.

8. Procédé selon l'une des revendications précédentes 1 à 7, dans lequel l'ensemble de compresseurs présente deux compresseur dont la vitesse de rotation peut être réglée au moyen d'un convertisseur de fréquence et le convertisseur de fréquence n'est affecté qu'à un compresseur, **caractérisé en ce que** dans le cas d'un changement de charge de base, le compresseur à réglage de la vitesse de rotation et le compresseur alimenté par le secteur, pour autant que celui-ci ait été connecté, sont déconnectés, le convertisseur de fréquence est connecté au compresseur alimenté par le secteur précédent et le compresseur suivant est enclenché, la fréquence du compresseur à réglage de la vitesse de rotation avant le changement de charge de base étant fournie à celui-ci comme valeur de consigne.

9. Procédé selon l'une des revendications précédentes 1 à 8, **caractérisé en ce que** pour un passage de la puissance à fournir par l'ensemble de compresseurs au-dessous de la puissance la plus faible pouvant être fournie par l'ensemble de compresseurs, il se produit une déconnexion temporisée du ou des derniers compresseurs en fonctionnement, la grandeur de la temporisation dépendant de l'importance de l'écart de réglage.

10. Procédé selon l'une des revendications précédentes 1 à 9, **caractérisé en ce que**, lors d'un fonctionnement d'un compresseur à réglage de vitesse de rotation à la vitesse maximale ou proche de la vitesse maximale pendant une période supérieure à 2 minutes, de préférence supérieure à 1 minute, le ou au moins l'un des compresseurs alimentés par le secteur est enclenché et la vitesse de rotation du compresseur à réglage de la vitesse de rotation est réduite.

11. Procédé selon l'une des revendications précédentes 1 à 10, dans lequel le ou les convertisseurs de fréquences utilisés permettent la détection du ou des courants du moteur du ou des compresseurs à réglage de la vitesse de rotation **caractérisé en ce que** lorsque courant du moteur passe au-dessus du courant nominal du convertisseur de fréquences utilisé, le courant du moteur est réduit, de préférence avec temporisation.
